# EUROPEAN PATENT APPLICATION

(11) **EP 4 488 929 A1**
(43) Date of publication of application: **08.01.2025**
(21) Application number: 22928990.5
(22) Date of filing: 28.12.2022
(51) Int. Cl.: G06T 7/00

(54) **FEATURE REGISTRATION DEVICE AND FEATURE REGISTRATION METHOD**

(30) Priority: 28.02.2022 JP 2022029853; 28.02.2022 JP 2022029854
(71) Applicant: Panasonic Intellectual Property Management Co., Ltd., Kadoma-shi, Osaka 571-0057 (JP)
(72) Inventor: FUCHIKAMI, Ryuji, Osaka 571-0057 (JP); IMURA, Koji, Osaka 571-0057 (JP); HU, Tingting, Osaka 571-0057 (JP)
(74) Representative: Eisenführ Speiser
(86) International application number: PCT/JP2022/048689
(87) International publication number: WO 2023/162476

(57) **Abstract**

This feature registration device comprises: an image filter which, using a parameter, performs an image conversion process on a plurality of different input images showing a subject; a feature extraction unit which extracts a plurality of features of an object of interest from a plurality of different converted images, which are the input images that have undergone the image conversion process; an output unit which generates a feature image obtained by superimposing the extracted plurality of features on a single image of interest from among the plurality of different converted images and outputs, to a display device, an image containing at least the feature image and a parameter adjustment bar; and an input interface which receives user operations. The output unit outputs a screen to the display device while updating the feature image on the basis of the parameter after a parameter change operation to the user-controlled adjustment bar.

## Description

### TECHNICAL FIELD

The present disclosure relates to a feature point registration device and a feature point registration method.

### BACKGROUND ART

In a production process in a factory, when a predetermined industrial component needs to be picked up in a plurality of objects (for example, industrial components used for production of industrial articles) flowing through a belt conveyor or the like, for example, according to processing on an image captured by a camera, it is required to quickly determine whether an object appearing in the image is the object to be picked up. As such a determination method, there is a method in the related art in which a feature of a feature point of an object appearing in an image captured by a camera is extracted, and it is determined whether the object is an object to be picked up by comparing (matching) with a feature (so-called template) of a predetermined feature point.

Patent Literature 1 discloses a technique for adding blurring processing to a template and a search target image, performing differential processing on the image after the blurring processing, and accumulating and forming a histogram of the obtained edge intensity features and edge direction features within a predetermined region to extract feature vectors of the template and the search target image.

### CITATION LIST

### PATENT LITERATURE

Patent Literature 1: JP2005-339075A

### SUMMARY OF INVENTION

### TECHNICAL PROBLEM

According to Patent Literature 1, it is possible to extract a feature (that is, a characteristic part corresponding to a feature point) of each of the template and the search target image. However, it is not assumed to determine whether the extracted feature point is an appropriate feature point (for example, a feature point that also appears invariably in other similar individuals). In the production process in the factory described above, objects (for example, industrial components) that fall within a field angle of the camera have the same or similar model numbers, and thus the same products are flowing, but variations between individual industrial components may be generated. Therefore, feature points obtained by image processing of the objects that sequentially enter the field angle can vary depending on individuals, and not all of the feature points are appropriate, and thus it is difficult to distinguish between the extracted feature points that may be registered and the extracted feature points that may not be registered, and a higher efficiency is required in registration of the feature points. In particular, if the registration of the feature points can be confirmed by a viewpoint of a user (operator), it is considered that more efficient registration of the feature points can be implemented.

The present disclosure has been made in view of the circumstances in the related art, and an object thereof is to provide a feature point registration device, a feature point registration method, and an image processing system that visualize, in a viewable manner for a user, a variation in feature points extracted from each of a plurality of images in which an object is imaged, and assist selection of the feature points to be registered as a template by the user.

### SOLUTION TO PROBLEM

The present disclosure provides a feature point registration device including: an image filter configured to perform image conversion processing by using a parameter on each of a plurality of different input images in which an object appears; a feature point extraction unit configured to extract a plurality of feature points related to the object from each of a plurality of different conversion processing images which are the input images after the image conversion processing performed by the image filter; an output unit configured to generate a feature point image in which the plurality of feature points extracted by the feature point extraction unit are superimposed on one of the plurality of different conversion processing images, and output a screen including at least the feature point image and an adjustment bar for the parameter to a display device; and an input interface configured to accept an operation of a user. When a change operation by the user on the parameter to the adjustment bar is input to the input interface, the output unit updates the feature point image based on the parameter after the change operation and outputs the screen to the display device.

In addition, the present disclosure provides a feature point registration method executed by a feature point registration device, the feature point registration method including: a step of performing image conversion processing by using a parameter on each of a plurality of different input images in which an object appears by an image filter; a step of extracting a plurality of feature points related to the object from each of a plurality of different conversion processing images which are the input images after the image conversion processing performed by the image filter; a step of generating a feature point image in which the plurality of extracted feature points are superimposed on one of the plurality of different conversion processing images, and outputting a screen including at least the feature point image and an adjustment bar for the parameter to a display device; and a step of updating the feature point image based on the parameter after a change operation and outputting the screen to the display device when the change operation by the user on the parameter to the adjustment bar is input to the input interface.

### ADVANTAGEOUS EFFECTS OF INVENTION

According to the present disclosure, it is possible to visualize, in a viewable manner for the user, the feature points extracted from each of the plurality of images in which the object is imaged, and it is possible to assist the selection by the user of the feature point to be registered as a template.

### BRIEF DESCRIPTION OF DRAWINGS

FIG. 1 is a diagram briefly showing a system configuration example of an image processing system.
FIG. 2 is a block diagram showing a detailed internal configuration example of an image processing device according to a first or second embodiment.
FIG. 3 is a flowchart showing an operation procedure example of calculation processing of a feature deviation of a feature point by the image processing device.
FIG. 4 is a flowchart showing an operation procedure example of feature point registration by the image processing device according to the first embodiment.
FIG. 5 is a diagram showing an example of a feature point distribution screen having a feature point image before an adjustment operation to an adjustment bar.
FIG. 6 is a diagram showing an example of a feature point distribution screen having a feature point image updated after the adjustment operation to the adjustment bar.
FIG. 7 is a diagram showing a detailed example of a parameter adjustment area of an image filter.
FIG. 8 is a flowchart showing an operation procedure example of feature point registration by the image processing device according to the second embodiment.
FIG. 9 is a diagram showing an example of a feature point distribution screen displayed on a display device during an operation in FIG. 7.

### DESCRIPTION OF EMBODIMENTS

### (Background of First Embodiment)

According to JP2005-339075A, it is possible to extract a feature (that is, a characteristic part corresponding to a feature point) of each of the template and the search target image. However, it is not assumed to determine whether the extracted feature point is an appropriate feature point (for example, a feature point that also appears invariably in other similar individuals). In the production process in the factory described above, objects (for example, industrial components) that fall within a field angle of the camera have the same or similar model numbers, and thus the same products are flowing, but variations between individual industrial components may be generated. Therefore, feature points obtained by image processing of the objects that sequentially enter the field angle can vary depending on individuals, and not all of the feature points are appropriate, and thus it is difficult to distinguish between the extracted feature points that may be registered and the extracted feature points that may not be registered, and a higher efficiency is required in registration of the feature points.

The following first embodiment describes examples of a feature point registration device, a feature point registration method, and an image processing system that visualize a variation in feature points extracted from each of a plurality of images in which an object is imaged, and assist selection of the feature points to be registered as a template.

On the other hand, according to JP2005-339075A, it is possible to extract the feature (that is, the characteristic part corresponding to the feature point) of each of the template and the search target image. However, it is not assumed to determine whether the extracted feature point is an appropriate feature point (for example, a feature point that also appears invariably in other similar individuals). In the production process in the factory described above, objects (for example, industrial components) that fall within a field angle of the camera have the same or similar model numbers, and thus the same products are flowing, but variations between individual industrial components may be generated. Therefore, feature points obtained by image processing of the objects that sequentially enter the field angle can vary depending on individuals, and not all of the feature points are appropriate, and thus it is difficult to distinguish between the extracted feature points that may be registered and the extracted feature points that may not be registered, and a higher efficiency is required in registration of the feature points. In particular, if the registration of the feature points can be confirmed by a viewpoint of a user (operator), it is considered that more efficient registration of the feature points can be implemented.

The following first embodiment describes examples of a feature point registration device, a feature point registration method, and an image processing system that visualize, in a viewable manner for the user, feature points extracted from each of a plurality of images in which an object appears, and assist selection by a user of the feature points to be registered as a template.

Hereinafter, embodiments of the feature point registration device, the feature point registration method, and the image processing system according to the present disclosure will be described in detail with reference to the accompanying drawings as appropriate. However, the unnecessarily detailed description may be omitted. For example, the detailed description of well-known matters and the redundant description of substantially the same configuration may be omitted. This is to prevent the following description from being unnecessarily redundant and facilitate understanding for those skilled in the art. The accompanying drawings and the following description are provided for those skilled in the art to fully understand the present disclosure, and are not intended to limit the subject matters described in the claims.

### (First Embodiment)

In the first embodiment, a plurality of images of objects (for example, components BH) imaged by a camera 1 or the like are input to an image processing device 10, and the image processing device 10 compares feature points extracted from each of the images or conversion processing images obtained by being subjected to predetermined image processing on the images between the images or between the conversion processing images. The image processing device 10 displays the feature points that uniquely appear and the feature points that have a high probability of appearing invariably in any image or conversion processing image in an identifiable manner (for example, by color-coding) as a comparison result, and determines whether to register the feature points as feature points used for actual pattern matching based on an operation of a user WK1. As necessary, the image processing device 10 corrects (adjusts) a value of a parameter of the image processing performed by an image filter 13 or changes an item of the parameter according to the operation of the user WK1, thereby using the adjusted or changed parameter to similarly display the feature points that have a high probability of appearing invariably and the feature points that uniquely appear in an identifiable manner.

In the following description, the adjustment of the parameter is defined as correcting the value of the parameter used for the image processing performed by the image filter 13 (for example, a value of σ indicating an intensity of a Gaussian filter). On the other hand, the change of the parameter is defined as changing a type of the parameter used for the image processing performed by the image filter 13 (for example, σ indicating the intensity of the Gaussian filter used in blurring processing or sharpness processing) to another type of the parameter (for example, a cut-off frequency indicating a pass frequency in a frequency region of a pixel component).

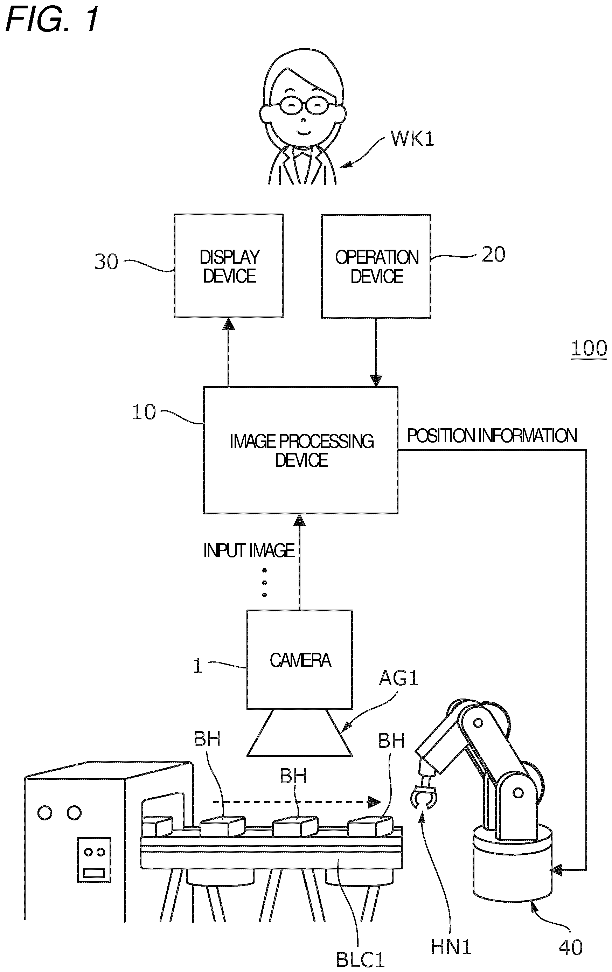

FIG. 1 is a diagram briefly showing a system configuration example of an image processing system 100. In the first embodiment, a use case of the image processing system 100 used in a production process in a factory will be described as an example. The image processing system 100 includes the camera 1, the image processing device 10, an operation device 20, a display device 30, and a robot 40. The camera 1 and the image processing device 10 are connected to each other, the image processing device 10 and the operation device 20 are connected to each other, and the image processing device 10 and the display device 30 are connected to each other such that input and output (transmission and reception) of data signals therebetween are possible.

The camera 1 is set to have a field angle (visual field range AG1) at which the object (for example, the component BH which is an industrial article or an industrial component. The same applies to the following description.) flowing on a belt conveyor BLC1 provided in a factory appears. The camera 1 images the object (the component BH), which is a subject in the visual field range AG1, at a predetermined frame rate, and transmits, to the image processing device 10, imaging data (that is, an input image) of each component BH obtained every time the imaging is performed.

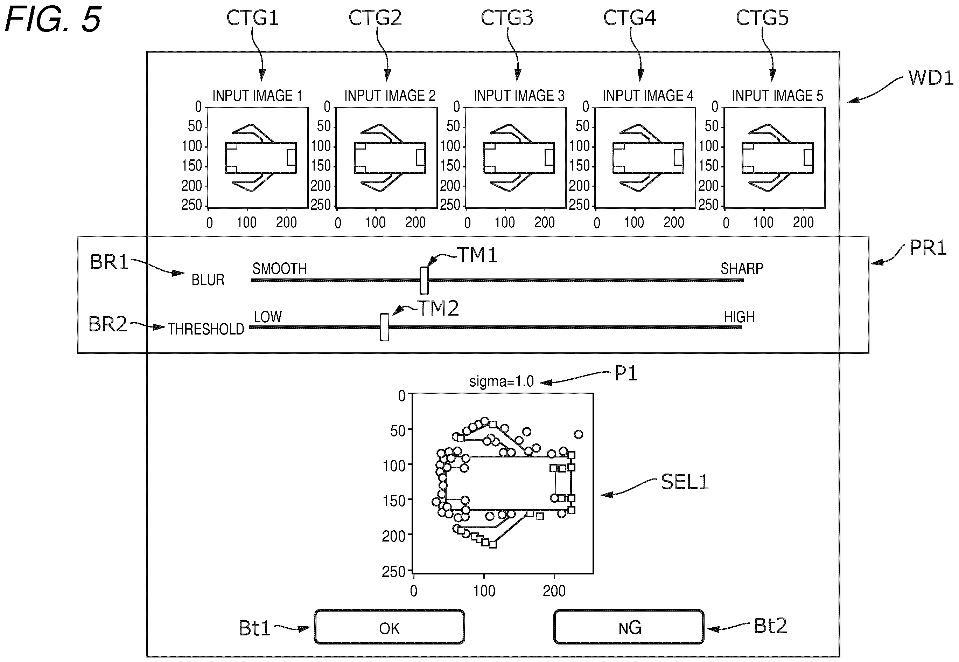

The image processing device 10 (an example of a feature point registration device) is implemented by a computer capable of executing predetermined processing (described later) by using the input images of the object (the component BH) imaged by the camera 1, and for example, a personal computer (PC) or a dedicated hardware device specialized for the image processing may be used. The image processing device 10 inputs the input images of the object (the component BH) imaged by the camera 1, executes the predetermined processing (described later) by using the input images which is input, generates a screen (for example, see FIG. 5, 6, or 9) which is a processing result, and outputs (displays) the generated screen to the display device 30. The image processing device 10 may execute the predetermined processing (described later) based on a signal from the operation device 20 in which the operation of the user WK1 is detected. When position information of the component BH is extracted from the input image which is input, the image processing device 10 may generate a control signal including the position information and transmit the control signal to the robot 40.

The operation device 20 is an interface that detects an operation input of the user WK1, and is implemented by, for example, a mouse, a keyboard, or a touch panel. In response to reception of an operation of the user WK1, the operation device 20 generates a signal based on the operation and transmits the signal to the image processing device 10.

The display device 30 is a device that outputs (displays) a display screen (for example, see FIG. 5, 6, or 9) generated by the image processing device 10, and is implemented by, for example, a liquid crystal display (LCD) or an organic electroluminescence (EL) device.

The robot 40 includes a manipulator having an articulated arm in which a plurality of links are rotatably coupled to each other via a joint, and based on a control signal (see above) from the image processing device 10, drives a tip end portion (for example, an end effector HN1 such as a robot hand) of the manipulator to pick up the component BH or performs alignment such as fine adjustment of a mounting position on a substrate on which the component BH is already mounted. Here, the robot 40 picks up and aligns the component BH based on the control signal from the image processing device 10, but it goes without saying that an action of the robot 40 is not limited thereto.

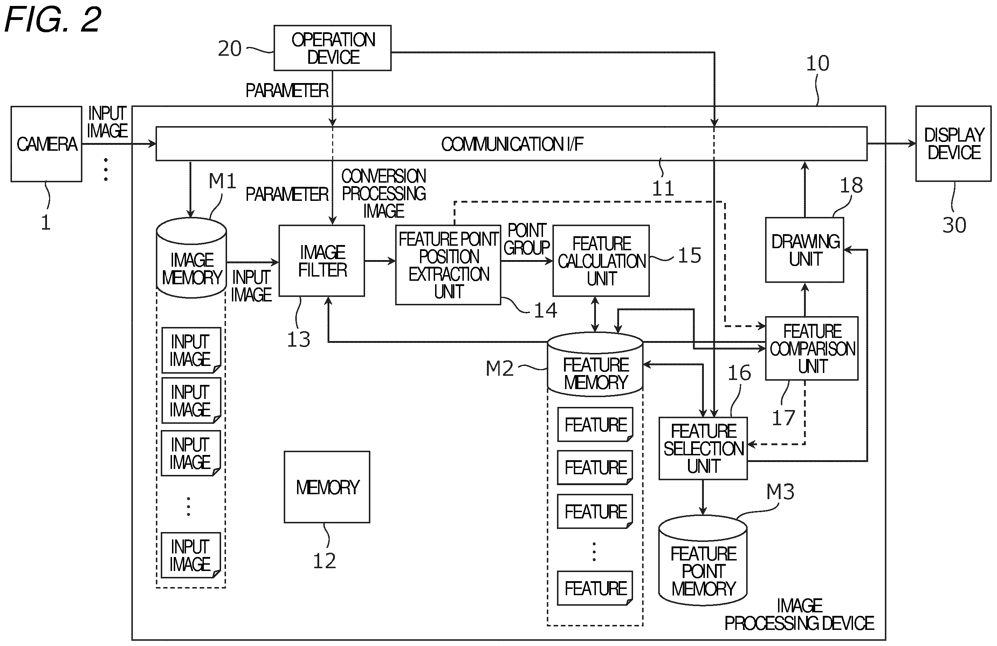

FIG. 2 is a block diagram showing a detailed internal configuration example of the image processing device 10 according to the first embodiment or a second embodiment. The image processing device 10 includes a communication interface 11, a memory 12, the image filter 13, a feature point position extraction unit 14, a feature calculation unit 15, a feature selection unit 16, a feature comparison unit 17, a drawing unit 18, an image memory M1, a feature memory M2, and a feature point memory M3. The communication interface 11, the memory 12, the image filter 13, the feature point position extraction unit 14, the feature calculation unit 15, the feature selection unit 16, the feature comparison unit 17, the drawing unit 18, the image memory M1, the feature memory M2, and the feature point memory M3 are connected to each other via a data transmission bus (not shown) such that data signals can be input and output to and from each other.

The communication interface 11 (an example of an input interface) is a communication circuit that performs input and output (transmission and reception) of the data signals between the camera 1 and the image processing device 10, between the image processing device 10 and the operation device 20, and between the image processing device 10 and the display device 30. The communication interface 11 receives imaging data (for example, an image in which the component BH appears) input from the camera 1 each time, and accumulates and stores the received imaging data in the image memory M1. In response to reception of a signal corresponding to the adjustment operation or the change operation of the parameter used by the image filter 13 from the operation device 20, the communication interface 11 transmits the signal to the image filter 13. In response to reception of, from the operation device 20, a signal corresponding to a selection operation of the feature points extracted based on the input image in which the component BH appears or a feature of the feature points, the communication interface 11 transmits the signal to the feature selection unit 16. The communication interface 11 transmits various screens (for example, see FIG. 5, 6, or 9) generated by the drawing unit 18 to the display device 30.

The memory 12 at least includes, for example, a random access memory (RAM) and a read only memory (ROM), and temporarily holds a program and control data necessary for executing an operation of the image processing device 10, and further, data generated or acquired during execution of processing by each unit of the image processing device 10. The RAM is, for example, a work memory used during execution of the processing by each unit of the image processing device 10. The ROM holds, for example, programs and control data defining the processing of each unit of the image processing device 10 in advance.

The image memory M1 is, for example, a flash memory, a hard disk drive (HDD), or a solid-state drive (SSD), and stores a plurality of pieces of imaging data (for example, input images in which the component BH appears) input from the camera 1 at any time.

The image filter 13 performs the predetermined image processing on each of the plurality of input images read from the image memory M1 by using a setting value (for example, an initial value of a parameter, or a parameter adjusted or changed by the operation device 20) which is a parameter for the image processing. The image filter 13 is, for example, a finite impulse response (FIR) filter that includes multi-stage taps and can freely set a filter coefficient of each tap. Updating of the filter coefficient is performed by a predetermined algorithm (for example, least mean square (LMS)). The image filter 13 inputs the input image subjected to the image processing (hereinafter, referred to as "conversion processing image") to the feature point position extraction unit 14. Here, the predetermined image processing is, for example, processing of performing blurring processing (so-called smoothing processing for smoothing a change in a pixel value) on the input image, processing of performing sharpness processing (for example, processing of increasing contrast of a contour portion in the input image) on the input image, processing of emphasizing a gain of an edge portion in the input image, or processing of reducing a pixel component other than a pixel component of a predetermined frequency band by using a band pass filter. When a signal corresponding to an adjustment operation on a kernel size indicating an image processing unit is acquired from the operation device 20, the image filter 13 may perform the image processing using the kernel size after the adjustment operation. Although it has been described that the image filter 13 performs the predetermined image processing on each of the plurality of input images read from the image memory M1, each of the plurality of input images read from the image memory M1 may be input to the feature point position extraction unit 14 as it is without being subjected to the image processing. In this case, in the following description, the input image input to the feature point position extraction unit 14 without being subjected to the predetermined image processing by the image filter 13 may be referred to as the conversion processing image.

The feature point position extraction unit 14 (an example of a feature point extraction unit) includes, for example, a digital signal processor (DSP) or a field-programmable gate array (FGPA). The feature point position extraction unit 14 set the conversion processing images input from the image filter 13 as targets to extract a plurality of feature points related to the object (for example, the component BH) from the conversion processing images for each of the conversion processing images (that is, positions indicating characteristic locations (points) where, for example, a rotation change, scale change, or brightness change is maximum in the conversion processing image in which the component BH appears). This extraction method can use a well-known algorithm such as scale-invariant feature transform (SIFT). The feature point position extraction unit 14 extracts a plurality of feature points from one input conversion processing image, and transmits the extraction result (for example, point group data indicating respective positions of the plurality of feature points in the conversion processing image) to the feature calculation unit 15. The point group data indicating the positions of the feature points in one conversion processing image may be temporarily stored in, for example, the memory 12, or may be temporarily stored in the feature memory M2. The feature point position extraction unit 14 may directly transmit the extraction result of the plurality of feature points related to the object (for example, the component BH) from the conversion processing image to the feature comparison unit 17. In this case, the features are not calculated, and the extraction results of the feature points are compared by the feature comparison unit 17 between the conversion processing images, and the same applies hereinafter.

The feature calculation unit 15 includes, for example, the DSP or the FGPA. The feature calculation unit 15 calculates the features (feature vectors) including data sequences of numerical values corresponding to the respective feature points by using the point group data of the feature points of each of the conversion processing images input from the feature point position extraction unit 14. After calculating the feature corresponding to the feature points of each of the conversion processing images, the feature calculation unit 15 stores the calculation result (data) of the feature corresponding to the feature points of each of the conversion processing images in the feature memory M2.

The feature memory M2 is, for example, a flash memory, an HDD, or an SSD, and stores the calculation result (data) of the feature corresponding to the feature points of each of the conversion processing images calculated by the feature calculation unit 15.

The feature selection unit 16 (an example of a registration unit) is implemented by, for example, a central processing unit (CPU). The feature selection unit 16 reads the feature points obtained for each of the plurality of conversion processing images or the calculation result of the feature corresponding to the feature points, which are stored in the feature memory M2, and selects at least one of the feature or the feature points obtained for each of the conversion processing images based on a signal from the communication interface 11 and transmits the selected one to the drawing unit 18. The feature selection unit 16 registers (stores), in the feature point memory M3, feature point data indicating data such as the position of the feature point selected from one conversion processing image.

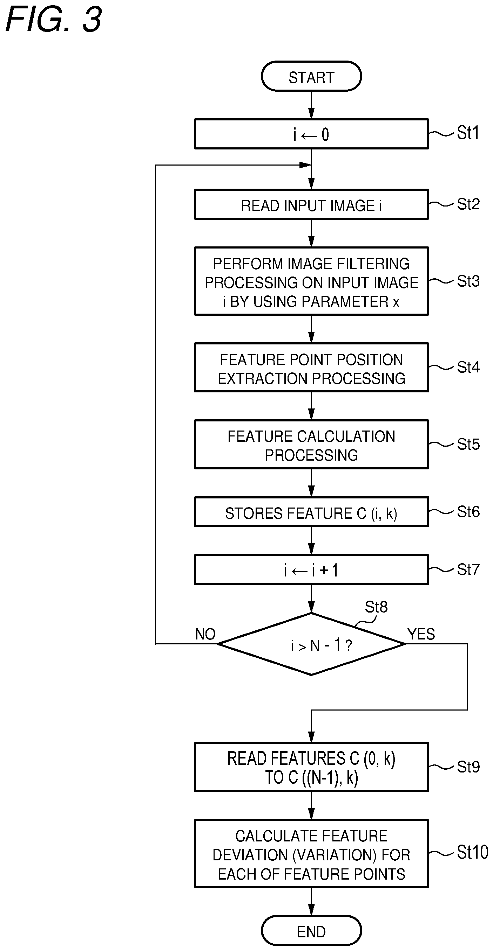

The feature comparison unit 17 includes, for example, the DSP or the FGPA. The feature comparison unit 17 compares the calculation result (data) of the feature of the feature points for each of the plurality of conversion processing images, which is stored in the feature memory M2, between the conversion processing images, and calculates a variation (that is, feature deviation) of the feature for each of the feature points. Details of the calculation processing of the feature deviation by the feature comparison unit 17 will be described later with reference to FIG. 3. The feature comparison unit 17 temporarily stores, in the memory 12 or the feature memory M2, the calculation result of the feature deviation of the feature points between the conversion processing images.

The drawing unit 18 (an example of an output unit) is implemented by, for example, a CPU. The drawing unit 18 uses one conversion processing image selected by the feature selection unit 16, the feature point data indicating the data such as the positions of the feature points in the conversion processing image, and the calculation result of the feature deviation of the feature points between the comparison processing images by the feature comparison unit 17 to generate a feature point image (for example, see a feature point image SEL1 shown in FIG. 5) in which the feature points extracted from the conversion processing image are superimposed on the conversion processing image, and generates a screen including the feature point image (see, for example, FIG. 5, 6, or 9). The drawing unit 18 outputs (displays) the generated screen to the display device 30 via the communication interface 11.

The feature point memory M3 is, for example, a flash memory, a hard disk drive (HDD), or a solid-state drive (SSD), and stores the feature point data indicating the positions of the feature points in one conversion processing image selected by the feature selection unit 16 for each of the conversion processing images.

FIG. 3 is a flowchart showing an operation procedure example of the calculation processing of the feature deviation of the feature points by the image processing device 10. In FIG. 3, the image processing device 10 uses a plurality of (for example, N (an integer equal to or larger than 2) images input from the camera 1 to quantitatively calculate how much feature deviation of the features of the feature points extracted from the respective images occur between images.

In FIG. 3, the image filter 13 sets variable i (variable from 0 to (N-1)) ← 0 (Step St1), and reads an i-th input image from the image memory M1 (Step St2). The image filter 13 performs the predetermined image processing (image filtering processing) on the i-th input image read in Step St2 by using a parameter x which is a current setting value, and generates an i-th conversion processing image which is the input image subjected to the image processing (Step St3). As described above, the image filtering processing corresponds to, for example, the blurring processing or the sharpness processing.

The feature point position extraction unit 14 sets the i-th conversion processing image generated by the image filter 13 in Step St3 as a target to extract a plurality of feature points related to the object (for example, the component BH) from the conversion processing target for each of the conversion processing targets (Step St4). The feature calculation unit 15 calculates a feature C (i, k) (feature vector) including a data sequence of numerical values corresponding to the respective feature points by using the point group data of the feature points of the i-th conversion processing image extracted by the feature point position extraction unit 14 in Step St4 (Step St5). The feature calculation unit 15 stores the feature C (i, k) calculated in Step St5 in the feature memory M2 (Step St6), and increments the current variable i (i ← i+1) (Step St7).

Here, the feature corresponding to the feature points of the i-th conversion processing image is denoted by C (i, k). K is the number of feature points extracted in the i-th conversion processing image, and is an integer of 2 or more but a value that varies depending on the conversion processing images, and the same applies hereafter. For example, even if the value of k, which is the number of feature points extracted from a first conversion processing image in which the component BH appears, is 10, there is a possibility that the value of k, which is the number of feature points extracted in a second conversion processing image in which the same component BH appears, may be 10, or may be 9 or 11 or another number. Therefore, k is a value that necessarily varies depending on the conversion processing image and is never a fixed value. In this way, C (i, k) indicates a feature (feature vector) including a data sequence of the numerical values indicating the feature corresponding to k feature points extracted from the i-th conversion processing image.

After Step St7, the feature comparison unit 17 determines whether the variable i incremented in Step St7 exceeds (N-1) (Step St8). That is, if the variable i does not exceed (N-1) (NO in Step St8), the processing from Step St2 to Step St8 is repeated. On the other hand, if the feature comparison unit 17 determines that the variable i exceeds (N-1) (YES in step st8), the feature comparison unit 17 reads and acquires, from the feature memory M2, features C (0, k), ..., C ((N-1), k) calculated by N times of repetition of the processing from Step St2 to Step St8 (Step St9).

The feature comparison unit 17 compares the features C (0, k), ..., C ((N-1), k) acquired in Step St9 among the conversion processing images. That is, the feature comparison unit 17 calculates variations (in other words, feature deviations) among the feature C (0, k) corresponding to the feature points extracted from the first (i = 0) conversion processing image, the feature C (1, k) corresponding to the feature points extracted from the second (i = 1) conversion processing image, ..., and the feature C ((N-1), k) corresponding to the feature points extracted from the N-th (i = (N-1)) conversion processing image (Step St10).

In Step St10, the feature comparison unit 17 calculates an inter-vector distance (for example, Euclidean distance) between the features C calculated corresponding to the respective conversion processing images as an example of the feature deviation. An example of the feature deviation is not limited to the inter-vector distance between the features C, and the feature comparison unit 17 may use a deviation value (in other words, variance) of the inter-vector distance between the features C calculated corresponding to the respective conversion processing images.

The feature comparison unit 17 may use a predetermined threshold stored in advance in the memory 12 to select only the features C in which the inter-vector distance (for example, Euclidean distance) between the features C calculated corresponding to the respective conversion processing images is within the predetermined threshold, and calculate the inter-vector distance (for example, Euclidean distance) between the selected features C or variance thereof as an example of the feature deviation. Accordingly, the feature comparison unit 17 can more appropriately calculate the feature deviation including the presence or absence of variation in the feature C by removing an influence of the conversion processing image in which noise is obviously added among the features C calculated for the respective N conversion processing images.

The feature comparison unit 17 may use a predetermined threshold stored in advance in the memory 12 and a weight coefficient (not shown) for each distance to multiply the weight coefficient corresponding to each of the inter-vector distances (for example, Euclidean distances) between the features C (for example, the longer the distance, the smaller the weight coefficient, and the shorter the distance, the larger the weight coefficient), select only the features C in which the multiplication result exceeds the predetermined threshold, and calculate the inter-vector distance (for example, Euclidean distance) between the selected features C or the variance thereof as an example of the feature deviation. Accordingly, the feature comparison unit 17 removes the influence of the conversion processing image in which noise is obviously added among the features C calculated for the respective N conversion processing images, and preferentially selects the feature C with the shortest distance (in other words, high similarity between the feature points) by taking into account the weight coefficient for each distance, so that the feature comparison unit 17 can more appropriately calculate the variation of the feature C.

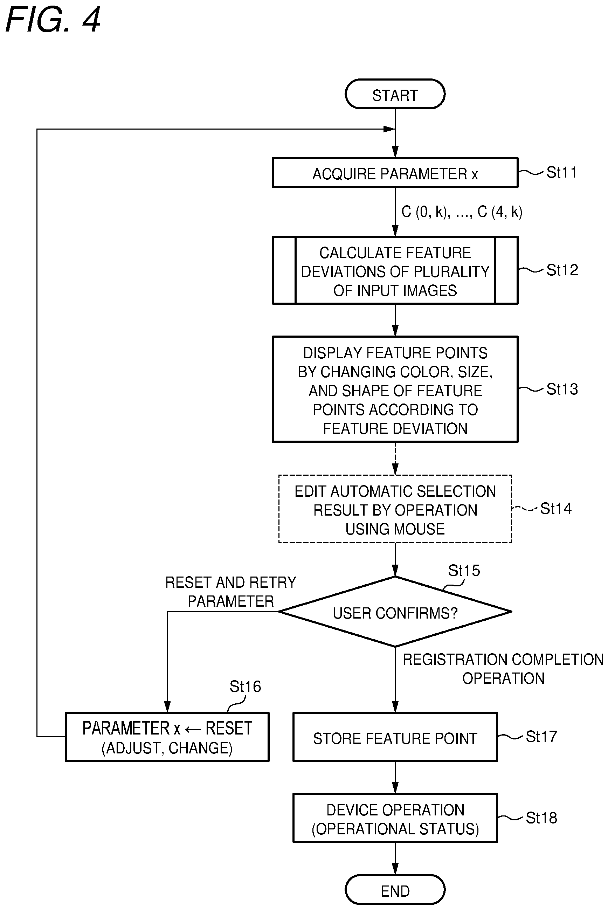

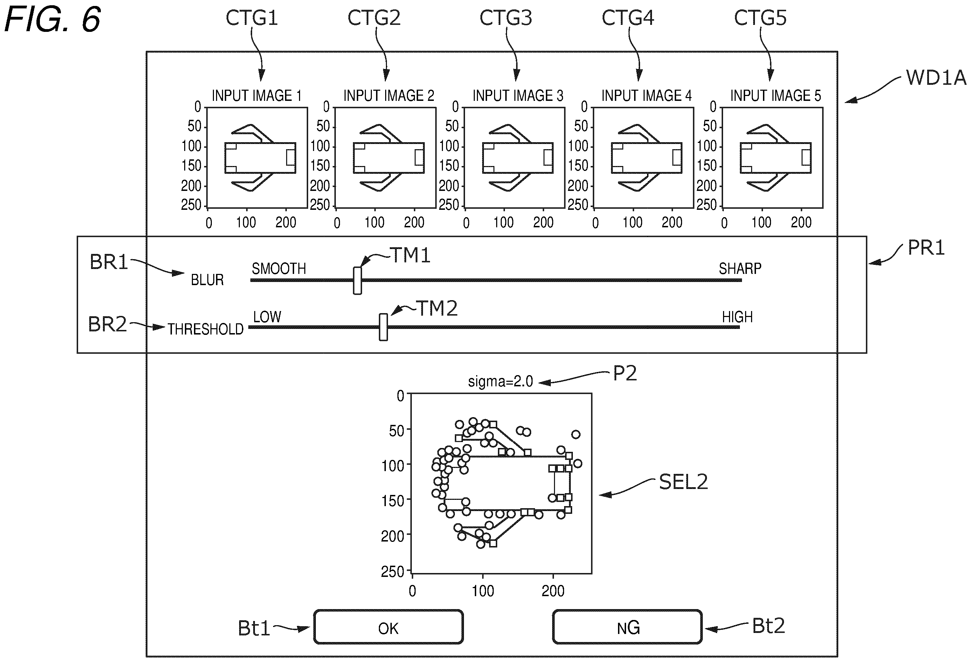

FIG. 4 is a flowchart showing an operation procedure example of feature point registration by the image processing device 10 according to the first embodiment. FIG. 5 is a diagram showing an example of a feature point distribution screen having the feature point image SEL1 before an adjustment operation to an adjustment bar BR1. FIG. 6 is a diagram showing an example of a feature point distribution screen having a feature point image SEL2 updated after the adjustment operation to the adjustment bar BR1. In the illustration of FIG. 4, FIGS. 5 and 6 are referred to as necessary.

For example, as shown in FIGS. 5 and 6, a case where N indicating the number of images to be subjected to the comparison processing (described later) in the image processing device 10 is 5 is exemplified. That is, in the first embodiment, it is assumed that five input images CTG1, CTG2, CTG3, CTG4, and CTG5 are input from the camera 1 to the image processing device 10.

In FIG. 4, the image processing device 10 (for example, the image filter 13) acquires the parameter x currently set in the image filter 13 from the image filter 13 (Step St11). The image processing device 10 (for example, the image filter 13) generates a conversion processing image corresponding to each of the plurality of (for example, N = 5) input images input from the camera 1. The image processing device 10 (for example, the feature comparison unit 17) performs the comparison processing among the features C (0, k), ..., C (4, k) corresponding to the feature points extracted from the respective conversion processing images among the conversion processing images.

That is, the image processing device 10 (for example, the feature comparison unit 17) calculates variations (in other words, feature deviations) among the feature C (0, k) corresponding to the feature points extracted from the first (i = 0) conversion processing image, the feature C (1, k) corresponding to the feature points extracted from the second (i = 1) conversion processing image, ..., and the feature C (4, k) corresponding to the feature points extracted from the fifth (i = 4) conversion processing image (Step St12). Since the processing of Step St12 is the same as the processing shown in FIG. 3, the detailed description thereof will be omitted. That is, the processing of Step St12 in FIG. 4 is a subroutine, and details of the processing of the subroutine are shown in FIG. 3.

The image processing device 10 (for example, the drawing unit 18) selects a specific one conversion processing image from the five conversion processing images by the comparison processing on the features C among the conversion processing images in Step St12. Further, the image processing device 10 (for example, the drawing unit 18) generates the feature point image SEL1 (for example, see FIG. 5) in which the feature points extracted from the specific one conversion processing image are superimposed on the conversion processing image based on the feature deviation between the feature corresponding to the feature points extracted from the selected specific one conversion processing image and the feature corresponding to the feature points extracted from each of the other four conversion processing images, generates a feature point distribution screen WD1 (see FIG. 5) including the feature point image SEL1, and outputs (displays) the feature point distribution screen WD1 to the display device 30 (Step St13).

For example, the feature point image SEL1 shown in FIG. 5 is displayed together with an indicator P1 indicating the parameter x (for example, σ (sigma) of the Gaussian filter which is a parameter set when performing the blurring processing is 1.0) acquired in Step St11. In the feature point image SEL1, for example, the extracted feature points are colored in two stages based on the feature deviations of the features corresponding to the feature points extracted from the other conversion processing images. For example, feature points having the feature deviation smaller than a predetermined value stored in the memory 12 and a high probability of appearing invariably in other conversion processing images are shown in orange color (indicated by white filled squares in FIG. 5). Each of the feature points with orange color (indicated by white squares) has an attribute of being a feature point to be registered (stored). On the other hand, the unique feature points which are extracted from the conversion processing image, have the feature deviation larger than the predetermined value stored in the memory 12, and hardly appear in other conversion processing images are indicated in blue color (indicated by white circles in FIG. 5). Each of the feature points with blue color (indicated by white circles) have an attribute of being a feature point that is not registered (stored).

The feature point distribution screen WD1 of FIG. 5 displays a parameter adjustment area PR1 including adjustment bars BR1 and BR2 capable of adjusting the type of the parameter x set in the image filter 13 by the operation of the user WK1.

The adjustment bar BR1 can designate the execution of either the blurring processing (in other words, the smoothing processing) or the sharpness processing by a knob TM1 which is slidable in a lateral direction by the operation of the user WK1. That is, by sliding the knob TM1 (see FIG. 6), a value of σ of the Gaussian filter can be adjusted to a value suitable for the blurring processing or a value suitable for the sharpness processing.

The adjustment bar BR2 can freely designate magnitude of the threshold (for example, the threshold of the feature deviation) by the knob TM2 which is slidable in the lateral direction by the operation of the user WK1. That is, by sliding the knob TM2, the user WK1 can freely adjust the threshold in order to select an image to be used for the comparison processing on the features of the feature points by excluding the conversion processing image in which noise is obviously superimposed.

The image processing device 10 (for example, the feature selection unit 16) may edit an attribute of at least one feature point (for example, the unique feature point) among the plurality of feature points superimposed on the feature point image SEL1 of the feature point distribution screen WD1 displayed in Step St13 by an operation of the user WK1 using the operation device 20 such as a mouse (Step St14). Step St14 is optional and may be omitted. The attribute editing indicates, for example, changing the settings of the feature points displayed in an identifiable manner as the unique feature points to the feature points (that is, the feature points having a high probability of appearing invariably) to be registered (stored) in Step St17 by the operation of the user WK1.

If the image processing device (for example, the feature selection unit 16) detects that an OK button Bt1 of the feature point distribution screen WD1 is pressed as the operation of the user WK1 (registration completion operation) (YES in Step St15), the image processing device registers (stores), in the feature point memory M3, at least one feature point having an attribute of being a feature point to be registered (stored) in Step St13 or Step St14 in association with identification information of the object (for example, the component BH) (Step St17). The registered (stored) feature points are used for matching (for example, pattern matching) with the feature points extracted from the input image input from the camera 1 at the time of actual operation (Step St18).

On the other hand, if it is detected that a NO button Bt2 of the feature point distribution screen WD1 is pressed as the operation of the user WK1 (parameter resetting operation) (NO in Step St15), the image filter 13 detects the operation of the user WK1 (that is, the adjustment operation or the change operation of the parameter x acquired in Step St 11) (Step St16). After Step St16, the processing of the image processing device 10 returns to Step St11. That is, the image processing device 10 repeats the processing from Step St11 to Step St14 until the registration completion operation of the user WK1 is detected.

For example, in FIG. 5, it is assumed that the image filter 13 detects that the knob TM1 is slid to "smoothly" tilt as the adjustment operation of the parameter x of the user WK1 (Step St16). In this case, the image processing device 10 (for example, the image filter 13) acquires the parameter x after the adjustment operation (for example, from "σ = 1.0" before the adjustment to "σ = 2.0" after the adjustment, see FIG. 6) (Step St11). The image processing device 10 similarly executes the processing from Step St12 to Step St13 by using the parameter x after the slide (that is, after the adjustment operation of the parameter x of the user WK1), generates a feature point distribution screen WD1A shown in FIG. 6, and outputs (displays) the feature point distribution screen WD1A to the display device 30.

For example, the feature point image SEL2 shown in FIG. 6 is displayed together with an indicator P2 indicating the parameter x (for example, σ (sigma) of the Gaussian filter which is a parameter set when performing the blurring processing is 2.0) acquired in Step St11 after resetting the parameter x (for example, adjusting the value or changing the parameter itself) in Step St16. In the feature point image SEL2, for example, the extracted feature points are colored in two stages based on the feature deviations of the features corresponding to the feature points extracted from the other conversion processing images. For example, feature points having the feature deviation smaller than a predetermined value stored in the memory 12 and a high probability of appearing invariably in any conversion processing image are shown in orange color (indicated by white filled squares in FIG. 6). Each of the feature points with orange color (indicated by white squares) has an attribute of being a feature point to be registered (stored). On the other hand, the unique feature points which are extracted from the conversion processing image, have the feature deviation larger than the predetermined value stored in the memory 12, and hardly appear in other conversion processing images are indicated in blue color (indicated by white circles in FIG. 6). Each of the feature points with blue color (indicated by white circles) have an attribute of being a feature point that is not registered (stored).

In the feature point image SEL1 shown in FIG. 5 and the feature point image SEL2 shown in FIG. 6, appearance positions of the feature points with orange color (indicated by white squares) and the feature points with blue color (indicated by white circles) are slightly different. This is because the parameter x (for example, σ = 1.0) used for generating the feature point image SEL1 is different from the parameter x (for example, σ = 2.0) used for generating the feature point image SEL2, and thus the degree of the blurring processing on the images used for the extraction of the feature points is different.

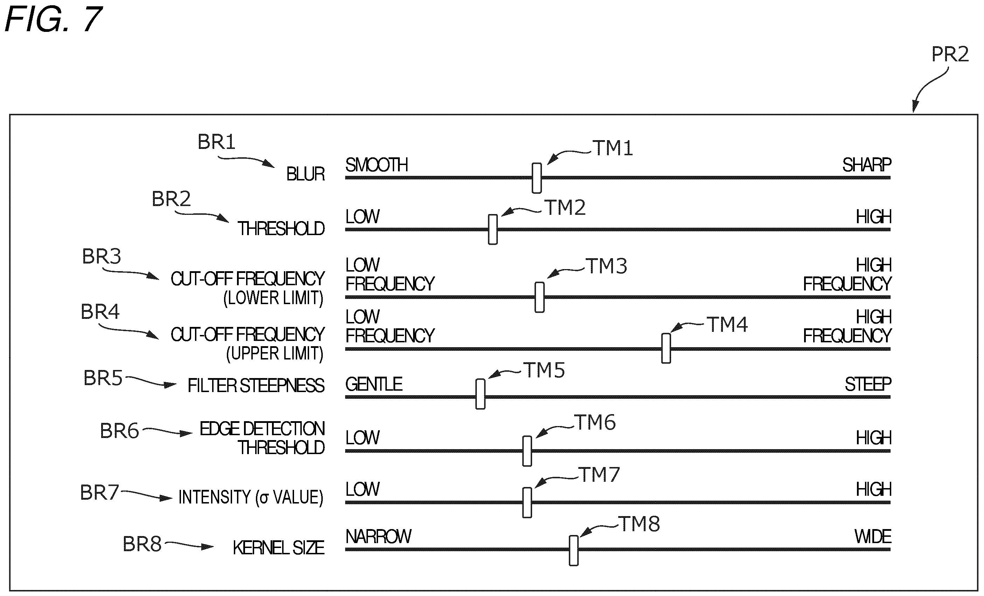

FIG. 7 is a diagram showing a detailed example of a parameter adjustment area PR2 of the image filter 13. The parameter adjustment area PR2 includes not only the adjustment bars BR1 and BR2 shown in FIGS. 5 and 6 but also other adjustment bars BR3, BR4, BR5, BR6, BR7, and BR8. Since the descriptions of the adjustment bars BR1 and BR2 are the same as contents described with reference to FIG. 5, the descriptions thereof are omitted here.

The adjustment bar BR3 can designate a lower limit value of the cut-off frequency to a low frequency side or a high frequency side by a knob TM3 which is slidable in the lateral direction by the operation of the user WK1. That is, by sliding the knob TM3 to the low frequency side or the high frequency side (see FIG. 7), the frequency lower limit value of the frequency component of the band pass filter allowed to be passed can be adjusted to a desired value.

The adjustment bar BR4 can designate an upper limit value of the cut-off frequency to the low frequency side or the high frequency side by a knob TM4 which is slidable in the lateral direction by the operation of the user WK1. That is, by sliding the knob TM4 to the low frequency side or the high frequency side (see FIG. 7), the frequency upper limit value of the frequency component of the band pass filter allowed to be passed can be adjusted to a desired value.

The adjustment bar BR5 can designate steepness of a characteristic of the filter coefficient of the image filter 13 (for example, a steepness degree of a main lobe of a window function) to a gentle side or a steep side by a knob TM5 which is slidable in the lateral direction by the operation of the user WK1. That is, by sliding the knob TM5 to the gentle side or the steep side (see FIG. 7), the steepness of the characteristic of the filter coefficient of the image filter 13 can be adjusted to a desired value.

The adjustment bar BR6 can designate a detection threshold of an edge component to be low or high by a knob TM6 which is slidable in the lateral direction by the operation of the user WK1. That is, by sliding the knob TM6 to a low side or a high side (see FIG. 7), the detection threshold of the edge component, which is easily extracted as a feature point, can be adjusted to a desired value.

The adjustment bar BR7 can designate an intensity (σ) of the Gaussian filter used by the image filter 13 for the smoothing processing or the like to be low or high by a knob TM7 which is slidable in the lateral direction by the operation of the user WK1. That is, by sliding the knob TM7 to a low side or a high side (see FIG. 7), the intensity (σ) of the Gaussian filter used when the image filter 13 performs the filtering processing can be adjusted to a desired value.

The adjustment bar BR8 can designate a kernel size that defines a size to be subjected to the filtering processing by the image filter 13 to be narrow or wide by a knob TM8 which is slidable in the lateral direction by the operation of the user WK1. That is, by sliding the knob TM8 to a narrow side or a wide side (see FIG. 7), the kernel size can be adjusted to a desired value.

As described above, in the image processing system 100 according to the first embodiment, the image processing device 10 includes the feature point position extraction unit 14 that extracts the plurality of feature points related to the object from each of the plurality of different input images (for example, the input images CTG1, CTG2, CTG3, CTG4, and CTG5) in which the object (for example, the component BH) appears, the feature comparison unit 17 that compares the feature points extracted from each of the plurality of different input images between the input images, and the feature selection unit 16 that registers a part of feature points among the plurality of feature points extracted from at least one input image in association with the object based on the comparison result of the feature points.

Accordingly, the image processing device 10 can compare the feature points extracted from each of the plurality of input images CTG1 to CTG5 in which the object (for example, the component BH) is imaged by the camera 1 or the like, and thus the image processing device 10 can assist the registration of the feature points usable for the pattern matching with the feature points extracted from the input images in which the component BH appears and which are input from the camera 1 or the like during the actual operation.

The image processing device 10 further includes the feature calculation unit 15 that calculates the respective features of the plurality of feature points extracted from the input images (for example, the input images CTG1, CTG2, CTG3, CTG4, and CTG5). The feature comparison unit 17 calculates and compares the similarity (for example, feature deviation indicating variation) of the feature points between the input images by using the calculation results of the features corresponding to the feature points extracted from the input images. Accordingly, the image processing device 10 can quantitatively visualize the variations of the feature points extracted from each of the plurality of input images CTG1 to CTG5 among the input images, and can assist the selection of the feature points to be registered as a template.

The image processing device 10 further includes the image filter 13 that performs the image conversion processing on the input image by using a predetermined parameter (for example, the parameter x). The feature point position extraction unit 14 extracts the plurality of feature points based on the conversion processing image which is an input image after the image conversion processing by the image filter 13. Accordingly, the image processing device 10 can improve an extraction accuracy of the feature points in each of the plurality of conversion processing images by using the conversion processing images obtained by the image processing performed by the image filter 13.

The feature selection unit 16 registers the part of feature points used for the comparison between the input images if it is determined that the calculation result of the similarity of the feature points between the input images is equal to or less than a threshold. Accordingly, if the similarity (the so-called feature deviation which is the variation) among the feature points extracted from each of the plurality of input images is small to an extent of being equal to or less than the threshold, the image processing device 10 can register the feature point having a small variation and a high probability of appearing invariably in any input image with high reliability.

The image processing device 10 further includes the feature calculation unit 15 that calculates the respective features of the plurality of feature points extracted from the input images. The feature comparison unit 17 calculates and compares the similarity (for example, the feature deviation indicating the variation) of the feature points between the conversion processing images by using the calculation results of the features corresponding to the feature points extracted from the conversion processing images. Accordingly, the image processing device 10 can visualize the variation of the feature points extracted from the conversion processing images obtained by performing the image processing on the plurality of input images CTG1 to CTG5 among the conversion processing images, and can assist the selection of the feature points to be registered as the template.

After the number of the conversion processing images in which the feature corresponding to the feature points is calculated reaches a predetermined number (for example, 5), the feature comparison unit 17 calculates and compares the similarity (for example, the feature deviation indicating the variation) of the feature points among the predetermined number of conversion processing images. Accordingly, the image processing device 10 can calculate, with high reliability, the variation serving as an index of whether the feature points extracted in the conversion processing image may be registered based on the comparison among the predetermined number of conversion processing images.

The image processing device 10 further includes the drawing unit 18 that generates the feature point image SEL1 in which the plurality of feature points extracted by the feature point position extraction unit 14 are superimposed on one of the plurality of different input images, and that outputs the feature point distribution screen WD1 including at least the feature point image SEL1 to the display device 30. Accordingly, the image processing device 10 can visually output the feature point image SEL1 in which the feature points extracted from one of the plurality of input images are superimposed to allow the positions of the feature points to be known, and thus it is possible to contribute to confirmation by the user WK1 who visually browses the feature point image SEL1.

The drawing unit 18 outputs, to the display device 30, the feature point distribution screen WD1 including the plurality of different input images (for example, the input images CTG1 to CTG5) and the feature point image SEL1 in a comparable manner. Accordingly, the user WK1 can easily compare the input images input from the camera 1 or the like before being subjected to the filtering processing by the image filter 13 with the feature point image SEL1 in which the feature points extracted from the input images are superimposed to allow the positions of the feature points to be known, and can easily determine a quality of the feature points to be registered by the feature point distribution screen WD1.

The image processing device 10 further includes the feature calculation unit 15 that calculates the respective features of the plurality of feature points extracted from the input images. The feature comparison unit 17 calculates and compares the similarity (for example, feature deviation indicating variation) of the feature points between the input images by using the calculation results of the features corresponding to the feature points extracted from the input images. The drawing unit 18 draws the feature points on the feature point image SEL1 by color-coding the calculation result of the similarity of the feature points. Accordingly, the user WK1 can easily determine whether the feature points are feature points (that is, feature points suitable for registration) that have a high probability of appearing invariably (commonly) in any input image or feature points (that is, feature points unsuitable for registration) that uniquely appear in the input image based on the color of the feature points superimposed on the feature point image SEL1.

The image conversion processing is the smoothing processing or the sharpness processing. Accordingly, the image processing device 10 can improve the accuracy of extracting the feature points suitable for registration.

The image processing device 10 further includes the image memory M1 that stores the plurality of different input images input from the camera 1 capable of imaging the object (for example, the component BH). Accordingly, the image processing device 10 can ensure a data buffer of the input image input from the camera 1 or the like each time, and can prevent occurrence of a buffer underflow in the image processing device 10.

The image processing device 10 further includes the feature memory M2 that stores the calculation results of the features corresponding to the feature points extracted from the input images. The feature comparison unit 17 calculates the similarity of the feature points between the input images by using the calculation results of the features stored in the feature memory M2. Accordingly, the image processing device 10 reads the data of the feature corresponding to the feature points from the feature memory M2, and thus can effectively reduce a load of the comparison processing on the features (in other words, the calculation processing on the feature deviation) of the feature points among the plurality of input images.

The image processing device 10 further includes the communication interface 11 that receives the adjustment operation on the predetermined parameter. The image filter 13 performs the image conversion processing on the input image by using the predetermined parameter after the adjustment operation. Accordingly, the image processing device 10 can easily adjust the parameter of the image processing performed by the image filter 13 by the adjustment operation on the parameters by the user WK1.

In the image processing system 100 according to the first embodiment, the image processing device 10 includes the image filter 13 that performs the image conversion processing by using the parameter on each of the plurality of different input images (for example, the input images CTG1 to CTG5) in which the object (for example, the component BH) appears, the feature point position extraction unit 14 that extracts the plurality of feature points related to the object from each of the plurality of different conversion processing images which are input images after the image conversion processing by the image filter 13, the drawing unit 18 that generates the feature point image SEL1 in which the plurality of feature points extracted by the feature point position extraction unit 14 are superimposed on one of the plurality of different conversion processing images, and that outputs the feature point distribution screen WD1 including at least the feature point image and the adjustment bar BR1 of the parameter to the display device 30, and the communication interface 11 that receives the operation of the user WK1. When a parameter change operation (for example, an operation of adjusting a value of the parameter) to the adjustment bar BR1 by the user WK1 is input to the communication interface 11, the drawing unit 18 updates the feature point image based on the parameter after the change operation and outputs a screen to the display device 30.

Accordingly, the image processing device 10 can visualize, in a viewable manner for the user WK1, the feature points extracted from each of the plurality of images in which the object (for example, the component BH) is imaged, and thus can assist the selection by the user WK1 of the feature points to be registered as a template.

The image processing device 10 includes the feature comparison unit 17 that compares the feature points extracted from each of the plurality of different conversion processing images among the conversion processing images, and the feature selection unit 16 that registers a part of feature points among the plurality of feature points included in the feature point image SEL1 in association with the object based on the comparison result of the feature points. Accordingly, the image processing device 10 can compare the feature points extracted from each of the plurality of input images CTG1 to CTG5 in which the object (for example, the component BH) is imaged by the camera 1 or the like, and thus the image processing device 10 can assist the registration of the feature points usable for the pattern matching with the feature points extracted from the input images in which the component BH appears and which are input from the camera 1 or the like during the actual operation.

The image processing device 10 further includes the feature calculation unit 15 that calculates the respective features of the plurality of feature points extracted from the conversion processing images. The feature comparison unit 17 calculates and compares the similarity (for example, the feature deviation indicating the variation) of the feature points between the conversion processing images by using the calculation results of the features corresponding to the feature points extracted from the conversion processing images. Accordingly, the image processing device 10 can quantitatively visualize the variation of the feature points extracted from each of the plurality of input images CTG1 to CTG5 among the input images.

The drawing unit 18 outputs the plurality of feature points in the feature point image SEL1 in an identifiable manner in at least two types of colors in accordance with the calculation result of the similarity of the feature points among the conversion processing images. Accordingly, the user WK1 can easily determine whether the feature points are feature points (that is, feature points suitable for registration) that have a high probability of appearing invariably (commonly) in any input image or feature points (that is, feature points unsuitable for registration) that uniquely appear in the input image based on the color of the feature points superimposed on the feature point image SEL1.

When a designation operation of registering or deleting the feature point by the user WK1 among the plurality of feature points in the feature point image SEL1 is input to the communication interface 11, the feature selection unit 16 registers or deletes the feature point designated by the designation operation. Accordingly, the user WK1 can visually confirm candidates of the feature points to be once registered as the feature point image SEL1, and can easily select whether to actually register the feature points or to delete the feature points not to be registered by the intention of the user WK1, thereby being able to improve convenience of the registration of the feature points.

### (Background of Second Embodiment)

According to JP2005-339075A, the blurring processing is performed to extract a feature (that is, a characteristic part corresponding to a feature point) of each of the template and the search target image. However, what extent of the blurring processing performed on each of the template and the search target image (in other words, using what parameter) to obtain an appropriate feature point (for example, a feature point that appears invariably in another same individual) is not assumed. In the production process in the factory described above, objects (for example, industrial components) that fall within a field angle of the camera have the same or similar model numbers, and thus the same products are flowing, but variations between individual industrial components may be generated. Therefore, it is difficult to perform the image processing such as the optimal blurring processing in accordance with each of the objects sequentially entering the field angle, but if it is possible to perform the image processing such as the blurring processing by using high-probability and efficient parameters in order to extract appropriate feature points (see above) no matter what object enters, it is expected that the registration processing of the feature points is more efficient.

The following second embodiment describes examples of an image processing device, an image processing method, and an image processing system which select an appropriate filter coefficient for an image filter to be applied to each of a plurality of images of an object, and assist selection of feature points to be registered as a template.

### (Second Embodiment)

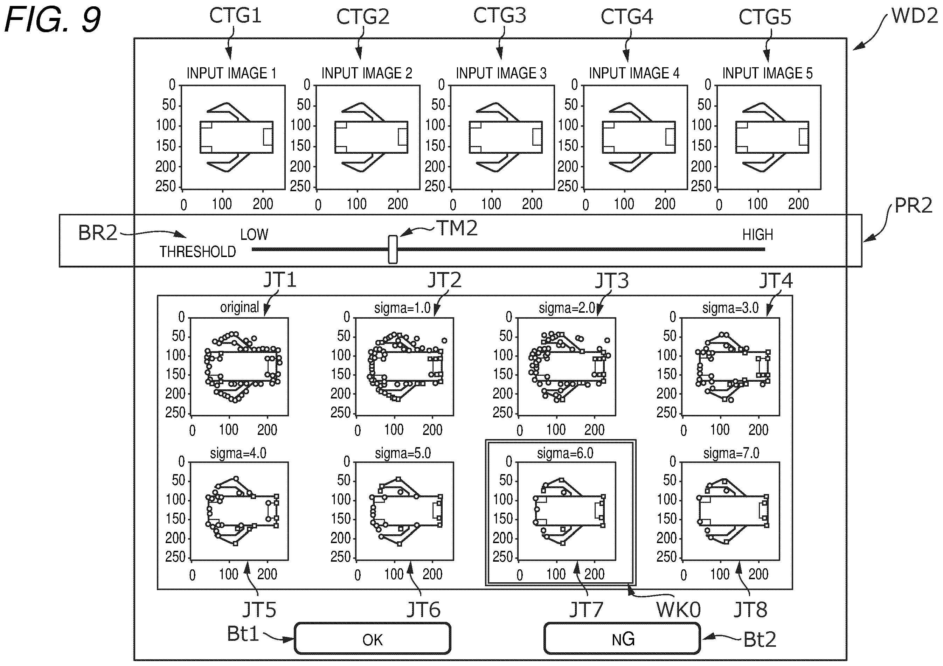

In the first embodiment, the example in which the adjustment of the parameter x of the image filter 13 is mainly manual adjustment by the operation of the user WK1 is described. In the second embodiment, an example in which the adjustment of the parameter x of the image filter 13 is automatically performed in the image processing device 10 will be described. Specifically, in the second embodiment, the image processing device 10 calculates variations (feature deviations) in the features of the feature points extracted from the plurality of input images or the conversion processing images using respective values while automatically adjusting M (M: a constant that is an integer of 2 or more) types of the values of the parameters used for the image processing by the image filter 13, generates (M+1) feature point images corresponding to the respective M types of the parameters based on any of the input images, and displays the generated feature point images in a comparable manner (see FIG. 9).

A configuration of an image processing system according to the second embodiment is the same as the configuration of the image processing system 100 according to the first embodiment, and in the description of the second embodiment, the same components as those of the first embodiment are denoted by the same reference numerals, and the description thereof will be simplified or omitted.

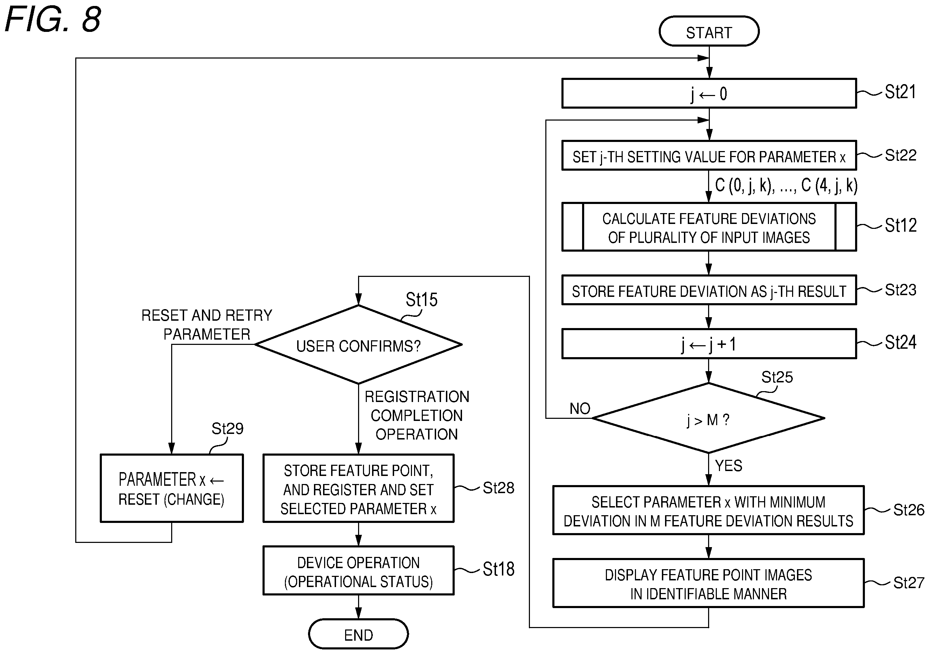

FIG. 8 is a flowchart showing an operation procedure example of the feature point registration by the image processing device 10 according to the second embodiment. FIG. 9 is a diagram showing an example of a feature point distribution screen WD2 displayed on the display device 30 during the operation in FIG. 7. In the illustration of FIG. 8, FIG. 9 is referred to as necessary. In the illustration of FIG. 8, the same processing as that in FIG. 4 is denoted by the same step number, the description thereof will be simplified or omitted, and different contents will be described.

For example, as shown in FIG. 9, a case where N indicating the number of images to be subj ected to the comparison processing in the image processing device 10 is 5 is exemplified. That is, in the second embodiment, it is assumed that the five input images CTG1, CTG2, CTG3, CTG4, and CTG5 are input from the camera 1 to the image processing device 10 as the input images.

In FIG. 8, the image processing device 10 (for example, the image filter 13) sets a variable j (a variable from 0 to M) ← 0 (Step St21), and the image filter 13 sets a j-th setting value for the parameter x used for the image processing to use (Step St22). The image processing device 10 (for example, the image filter 13) generates a conversion processing image corresponding to each of the plurality of (for example, N = 5) input images input from the camera 1 by using the j-th setting value (parameter x). The image processing device 10 (for example, the feature comparison unit 17) performs the comparison processing among features C (0, j, k), ..., C (4, j, k) corresponding to the feature points extracted from the respective conversion processing images among the conversion processing images. Here, the feature C (i, j, k) indicates a feature corresponding to the feature points extracted from the i-th conversion processing image generated by the image filter 13 using the j-th setting value (parameter x).

That is, the image processing device 10 (for example, the feature comparison unit 17) calculates variations (in other words, feature deviations) among the feature C (0, j, k) corresponding to the feature points extracted from the first (i = 0) conversion processing image, the feature C (1, j, k) corresponding to the feature points extracted from the second (i = 1) conversion processing image, ..., and the feature C (4, j, k) corresponding to the feature points extracted from the fifth (i = 4) conversion processing image (Step St12). Since the processing of Step St12 is the same as the processing shown in FIG. 3, the detailed description thereof will be omitted. That is, the processing of Step St12 in FIG. 8 is a subroutine, and details of the processing of the subroutine are shown in FIG. 3.

The image processing device 10 (for example, the feature comparison unit 17) stores the feature deviation calculated in Step St12 as the feature deviation result corresponding to the j-th setting value (parameter x) in the feature memory M2 (Step St23), and increments a current variable j (j ← j+1) (Step St24). After Step St24, the image processing device 10 (for example, the feature comparison unit 17) determines whether the variable j after being incremented in Step St24 exceeds M (Step St25). That is, if the variable j does not exceed M (NO in Step St25), the processing of Steps St22, St 12, St23, St24, and St25 is repeated. On the other hand, if it is determined that the variable j exceeds M (YES in Step st25), the image processing device 10 (for example, the feature comparison unit 17) reads and acquires the feature deviation results calculated by repeating the processing of Steps St22, St12, St23, St24, and St25 M times from the feature memory M2, and selects the parameter x corresponding to the feature deviation result in which the value of the deviation is the minimum (Step St26).

The image processing device 10 (for example, the drawing unit 18) selects a specific one (for example, the input image CTG1) from the five input images CTG1 to CTG5. The image processing device 10 (for example, the drawing unit 18) generates feature point images JT1, JT2, JT3, JT4, JT5, JT6, JT7, and JT8 in the same manner as in the first embodiment based on total of eight images including the selected input image CTG1 (that is, the original image which is not subjected to the image processing by the image filter 13) and the conversion processing images generated by adjusting the maximum M (for example, M = 7) parameters x including the parameter x selected in Step St26. The image processing device 10 (for example, the drawing unit 18) generates the feature point distribution screen WD2 (see FIG. 9) including the feature point images JT1 to JT8 and outputs (displays) the feature point distribution screen WD2 to the display device 30 (Step St27).

In particular, in Step St27, the image processing device 10 (for example, the drawing unit 18) preferably displays a registration recommendation frame WK0 for indicating that the best feature points appear around the feature point image (for example, the feature point image JT7) having the smallest feature point deviation (that is, the feature point to be registered appears most ideally) among the feature point images JT1 to JT8 in an identifiable manner (for example, a red frame). After Step St27, the processing of the image processing device 10 proceeds to Step St15 (see FIG. 4).

For example, the feature point image JT1 shown in FIG. 9 is an image in which the plurality of feature points extracted from the input image (for example, the input image CTG1) input to the image processing device 10 are superimposed on the input image, and is displayed by being color-coded according to the attributes of the feature points as in the first embodiment. That is, the feature points having a feature deviation smaller than the predetermined value stored in the memory 12 and a high probability of appearing invariably even in other conversion processing images are indicated in orange color (indicated by white squares in FIG. 9). Each of the feature points with orange color (indicated by white squares) has an attribute of being a feature point to be registered (stored). On the other hand, the unique feature points which are extracted from the conversion processing image, have the feature deviation larger than the predetermined value stored in the memory 12, and hardly appear in other conversion processing images are indicated in blue color (indicated by white circles in FIG. 9). Each of the feature points with blue color (indicated by white circles) have an attribute of being a feature point that is not registered (stored).

The feature point image JT2 shown in FIG. 9 is an image in which the plurality of feature points extracted from the conversion processing image obtained by performing the image processing by using the parameter x (that is, σ = 1.0) on the input image (for example, the input image CTG1) input to the image processing device 10 are superimposed on the conversion processing image, and is displayed by being color-coded according to the attributes of the feature points as in the first embodiment. Since the manner of color-coding display is the same as that described above, the detailed description thereof will be omitted.

The feature point image JT3 shown in FIG. 9 is an image in which the plurality of feature points extracted from the conversion processing image obtained by performing the image processing by using the parameter x (that is, α = 2.0) on the input image (for example, the input image CTG1) input to the image processing device 10 are superimposed on the conversion processing image, and is displayed by being color-coded according to the attributes of the feature points as in the first embodiment. Since the manner of color-coding display is the same as that described above, the detailed description thereof will be omitted.

The feature point image JT4 shown in FIG. 9 is an image in which the plurality of feature points extracted from the conversion processing image obtained by performing the image processing by using the parameter x (that is, σ = 3.0) on the input image (for example, the input image CTG1) input to the image processing device 10 are superimposed on the conversion processing image, and is displayed by being color-coded according to the attributes of the feature points as in the first embodiment. Since the manner of color-coding display is the same as that described above, the detailed description thereof will be omitted.

The feature point image JT5 shown in FIG. 9 is an image in which the plurality of feature points extracted from the conversion processing image obtained by performing the image processing by using the parameter x (that is, σ = 4.0) on the input image (for example, the input image CTG1) input to the image processing device 10 are superimposed on the conversion processing image, and is displayed by being color-coded according to the attributes of the feature points as in the first embodiment. Since the manner of color-coding display is the same as that described above, the detailed description thereof will be omitted.

The feature point image JT6 shown in FIG. 9 is an image in which the plurality of feature points extracted from the conversion processing image obtained by performing the image processing by using the parameter x (that is, σ = 5.0) on the input image (for example, the input image CTG1) input to the image processing device 10 are superimposed on the conversion processing image, and is displayed by being color-coded according to the attributes of the feature points as in the first embodiment. Since the manner of color-coding display is the same as that described above, the detailed description thereof will be omitted.

The feature point image JT7 shown in FIG. 9 is an image in which the plurality of feature points extracted from the conversion processing image obtained by performing the image processing by using the parameter x (that is, σ = 6.0) on the input image (for example, the input image CTG1) input to the image processing device 10 are superimposed on the conversion processing image, and is displayed by being color-coded according to the attributes of the feature points as in the first embodiment. Since the manner of color-coding display is the same as that described above, the detailed description thereof will be omitted.

The feature point image JT8 shown in FIG. 9 is an image in which the plurality of feature points extracted from the conversion processing image obtained by performing the image processing by using the parameter x (that is, σ = 7.0) on the input image (for example, the input image CTG1) input to the image processing device 10 are superimposed on the conversion processing image, and is displayed by being color-coded according to the attributes of the feature points as in the first embodiment. Since the manner of color-coding display is the same as that described above, the detailed description thereof will be omitted.

The image processing device 10 (for example, the drawing unit 18) displays, on the feature point distribution screen WD2 (see FIG. 9), the parameter adjustment area PR2 including the adjustment bar BR2 for freely designating magnitude of the threshold of the feature deviation. The adjustment bar BR2 can freely designate magnitude of the threshold (for example, the threshold of the feature deviation) by the knob TM2 which is slidable in the lateral direction by the operation of the user WK1. That is, by sliding the knob TM2, the user WK1 can freely adjust the threshold in order to select an image to be used for the comparison processing on the features of the feature points by excluding the conversion processing image in which noise is obviously superimposed.

Returning to FIG. 8, if the image processing device 10 (for example, the feature selection unit 16) detects that the OK button Bt1 of the feature point distribution screen WD2 is pressed as the operation of the user WK1 (registration completion operation) (YES in Step St15), the image processing device 10 registers and sets the parameter x selected in Step St26 in the image filter 13, and registers (stores), among the feature points superimposed on the feature point image displayed with the registration recommendation frame WK0 in Step St27, at least one feature point having an attribute of being a feature point to be registered (stored) in the feature point memory M3 in association with identification information of the object (for example, the component BH) (Step St28). The registered (stored) feature points are used for matching (for example, pattern matching) with the feature points extracted from the input image input from the camera 1 at the time of actual operation (Step St18).

On the other hand, if it is detected that the NO button Bt2 of the feature point distribution screen WD2 is pressed as the operation of the user WK1 (parameter resetting operation) (NO in Step St15), the image filter 13 detects the operation of the user WK1 (that is, the change operation on the parameter x acquired in Step St22) (Step St29). After Step St29, the processing of the image processing device 10 returns to Step St21. That is, the image processing device 10 repeats the processing of Steps St21, St22, St12, St23, St24, St25, St26, and St27 until the registration completion operation of the user WK1 is detected.

As described above, in the image processing system 100 according to the second embodiment, the image processing device 10 includes the image filter 13 that performs the image conversion processing on each of the plurality of different input images (for example, the input images CTG1 to CTG5) in which the object (for example, the component BH) appears by using a different one of the plurality of parameters, the feature point position extraction unit 14 that extracts the plurality of feature points related to the object from each of the plurality of different conversion processing images which are the input images after the image conversion processing by the image filter 13, the feature comparison unit 17 that compares the feature points extracted from each of the plurality of different conversion processing images among the conversion processing images, and the feature selection unit 16 that registers a specific parameter, which is any one of the plurality of parameters, as the filter coefficient for the matching processing in the image filter 13 based on the comparison result of the feature points.

Accordingly, the image processing device 10 can select an appropriate filter coefficient of the image filter to be applied to each of the plurality of input images in which the object (for example, the component BH) is imaged, and can assist the selection of the feature point to be registered as a template.

The feature selection unit 16 registers a part of feature points among the plurality of feature points extracted from the conversion processing image generated by the image filter 13 by using the specific parameter in association with the object (for example, the component BH). Accordingly, the image processing device 10 can register the part of feature points among the plurality of feature points extracted from the conversion processing image after the image processing with high reliability by using the optimum value determined as the parameter used by the image filter 13 for the image processing.

The image processing device 10 further includes the feature calculation unit 15 that calculates the respective features of the plurality of feature points extracted from the conversion processing images. The feature comparison unit 17 calculates and compares the similarity (for example, the feature deviation) of the feature points between the conversion processing images by using the calculation results of the features corresponding to the feature points extracted from the conversion processing images. Accordingly, the image processing device 10 can quantitatively visualize the variation in the feature points extracted from each of the plurality of conversion processing images among the conversion processing images, and can assist the selection of the feature points to be registered as a template.

The feature selection unit 16 registers the specific parameter in the image filter 13 if the calculation result of the similarity of the feature points between the conversion processing images generated by the image filter 13 by using the specific parameter is equal to or less than the threshold. Accordingly, the image processing device 10 can register, in the image filter 13 in a usable manner, the useful parameters of the image filter 13 contributing to the appearance of the feature points having a small variation when the similarity (feature deviation, that is, so-called variation) among the feature points extracted from each of the plurality of conversion processing images is small to an extent of being equal to or less than the threshold.

If it is determined that the calculation result of the similarity of the feature points between the conversion processing images generated by the image filter 13 by using the specific parameter is larger than the threshold, the feature comparison unit 17 changes the specific parameter to another parameter among the plurality of parameters and sets the parameter for the image filter 13. Accordingly, the image processing device 10 can assist quick selection of another useful parameter by treating the parameter used for extraction of the feature points as not being useful and prohibiting the use thereof when the result that the feature deviation becomes larger than the threshold is obtained.

The feature selection unit 16 registers, in the image filter 13, a parameter in which a sum of the calculation results of the similarities of the feature points among the conversion processing images generated by the image filter 13 by using a different one of the plurality of parameters is minimum. Accordingly, the image processing device 10 can register the parameters of the image filter 13 contributing to the calculation of the feature as useful parameters in the image filter 13 in a usable manner when the sum of the feature deviations calculated for the plurality of conversion processing images is minimum.

The feature selection unit 16 registers, in the image filter 13, a parameter in which the sum of the calculation results of the similarities of the feature points among the conversion processing images generated by the image filter 13 by using a different one of the plurality of parameters is equal to or less than a predetermined value. Accordingly, the image processing device 10 can register the parameters of the image filter 13 contributing to the calculation of the feature as useful parameters in the image filter 13 in a usable manner when the sum of the feature deviations calculated for the plurality of conversion processing images is not the minimum, but is small enough to be equal to or less than the predetermined value.

The image processing device 10 further includes the drawing unit 18 that generates the plurality of feature point images JT1 to JT8 in which the plurality of feature points extracted by the feature point position extraction unit 14 from the plurality of different conversion processing images are superimposed on the respective conversion processing images and outputs the feature point distribution screen WD2 including at least the plurality of feature point images to the display device 30. Accordingly, the image processing device 10 can output, in a comparable manner for the user WK1, each of the feature point images JT1 to JT8 in which the feature points extracted from each of the plurality of conversion processing images obtained by the image processing by using the different parameters are superimposed to allow the positions of the feature points to be known.

The drawing unit 18 identifiably outputs the registration recommendation frame WK0 around an excellent feature point image (for example, the feature point image JT7 shown in FIG. 9) having the highest number and proportion of the feature points to be registered based on a shape of the object (for example, the component BH) among the plurality of feature point images. Accordingly, the user WK1 can visually determine the feature point image JT7 recommended to be the most excellent as the feature points to be registered among the plurality of feature point images JT1 to JT8, and can improve the convenience of the registration of the feature points.

The image processing device 10 further includes the communication interface 11 that receives an operation indicating whether to register as a filter coefficient for matching processing. When a signal indicating registration as a filter coefficient for matching processing is detected by the communication interface 11, the feature selection unit 16 registers the specific parameter as the filter coefficient for the matching processing in the image filter 13. Accordingly, the user can easily register the parameter determined to be appropriate as the filter coefficient for the matching processing in the image filter 13 by the operation of the user.

The drawing unit 18 outputs, to the display device 30, the feature point distribution screen WD2 including the plurality of feature point images JT1 to JT8 generated based on the plurality of conversion processing images generated by the image filter 13 by using the plurality of parameters in a comparable manner. Accordingly, the image processing device 10 can display the plurality of feature point images JT1 to JT8 in a comparable manner so as to be viewed by the user WK1.

Although various embodiments have been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the various embodiments described above may be combined freely in a range without deviating from the spirit of the disclosure.

The present application is based on Japanese Patent Application No. 2022-029853 and Japanese Patent Application No. 2022-029854 filed on February 28, 2022, and the contents thereof are incorporated herein by reference.

### INDUSTRIAL APPLICABILITY

The present disclosure is useful as a feature point registration device, a feature point registration method, and an image processing system that visualize, in a viewable manner for the user, feature points extracted from each of a plurality of images in which an object appears, and assist selection by a user of the feature points to be registered as a template.

### REFERENCE SIGNS LIST

1 camera
10 image processing device
11 communication interface
12 memory
13 image filter
14 feature point position extraction unit
15 feature calculation unit
16 feature selection unit
17 feature comparison unit
18 drawing unit
20 operation device
30 display device
40 robot
100 image processing system
M1 image memory
M2 feature memory
M3 feature point memory

## Claims

1. A feature point registration device, comprising:
an image filter that performs image conversion processing by using a parameter on each of a plurality of different input images in which an object appears;
a feature point extraction unit that extracts a plurality of feature points related to the object from each of a plurality of different conversion processing images which are the input images after the image conversion processing performed by the image filter;
an output unit that generates a feature point image in which the plurality of feature points extracted by the feature point extraction unit are superimposed on one of the plurality of different conversion processing images, and outputs a screen including at least the feature point image and an adjustment bar for the parameter to a display device; and
an input interface that accepts an operation of a user, wherein
when a change operation by the user on the parameter to the adjustment bar is input to the input interface, the output unit updates the feature point image based on the parameter after the change operation and outputs the screen to the display device.

2. The feature point registration device according to claim 1, further comprising:
a feature comparison unit that compares the feature points extracted from each of the plurality of different conversion processing images between the conversion processing images; and
a registration unit that registers a part of feature points among the plurality of feature points included in the feature point image in association with the object based on a comparison result of the feature points.

3. The feature point registration device according to claim 2, further comprising:
a feature calculation unit that calculates respective features of the plurality of feature points extracted from the conversion processing images, wherein
the feature comparison unit calculates and compares a similarity of the feature points between the conversion processing images by using calculation results of the features corresponding to the feature points extracted from the conversion processing images.

4. The feature point registration device according to claim 3, wherein
the output unit outputs the plurality of feature points in the feature point image in an identifiable manner in at least two types of colors in accordance with a calculation result of the similarity of the feature points between the conversion processing images.

5. The feature point registration device according to claim 1, wherein
the output unit outputs, to the display device, the screen including a plurality of feature point images including the feature point image and other feature point images generated based on the plurality of conversion processing images generated by the image filter by using a plurality of parameters including the parameter and other parameters in a comparable manner.

6. The feature point registration device according to claim 2, wherein
when a designation operation of registering or deleting the feature point by the user among the plurality of feature points in the feature point image is input to the input interface, the registration unit registers or deletes the feature point designated by the designation operation.

7. A feature point registration method executed by a feature point registration device, the feature point registration method comprising:
performing image conversion processing by using a parameter on each of a plurality of different input images in which an object appears by an image filter;
extracting a plurality of feature points related to the object from each of a plurality of different conversion processing images which are the input images after the image conversion processing performed by the image filter;
generating a feature point image in which the plurality of extracted feature points are superimposed on one of the plurality of different conversion processing images, and outputting a screen including at least the feature point image and an adjustment bar for the parameter to a display device; and
in a case that a change operation by the user on the parameter to the adjustment bar is input to the input interface, updating the feature point image based on the parameter after the change operation and outputting the screen to the display device.
